# EUROPÄISCHE PATENTSCHRIFT

(11) **EP 2 121 235 B1**
(45) Veröffentlichungstag und Bekanntmachung des Hinweises auf die Patenterteilung: **26.06.2013**
(21) Anmeldenummer: 07847693.4
(22) Anmeldetag: 03.12.2007
(51) Int. Cl.: B23K 26/04, B23K 26/06, B23K 26/073, B23K 26/28

(54) **LASERSTRAHLSCHWEISSVORRICHTUNG MIT EINER OPTIKEINRICHTUNG ZUM UMWANDELN DES LASERSTRAHLES IN EINEN RINGFÖRMIGEN LASERSTRAHL SOWIE ENTSPRECHENDES LASERSTRAHLSCHWEISSVERFAHREN**
LASER-BEAM WELDING DEVICE COMPRISING AN OPTICAL MEANS FOR CONVERTING THE LASER BEAM INTO AN ANNULAR LASER BEAM AND A CORRESPONDING LASER-BEAM WELDING METHOD
DISPOSITIF DE SOUDAGE PAR RAYON LASER COMPRENANT UN DISPOSITIF OPTIQUE POUR CONVERTIR LE RAYON LASER EN UN RAYON LASER DE FORME ANNULAIRE AINSI QUE PROCÉDÉ CORRESPONDANT DE SOUDAGE PAR RAYON LASER

(30) Priorität: 27.12.2006 DE 102006061622; 30.07.2007 DE 102007035717
(43) Veröffentlichungstag der Anmeldung: 25.11.2009
(73) Patentinhaber: Robert Bosch GmbH, 70442 Stuttgart (DE)
(72) Erfinder: SPENNEMANN, Klaus, 586 06 Jihlava (CZ); KITTEL, Sonja, 70372 Stuttgart (DE)
(86) Internationale Anmeldenummer: PCT/EP2007/063182
(87) Internationale Veröffentlichungsnummer: WO 2008/080731

(56) Entgegenhaltungen:
- US-A- 3 419 321
- US-A- 4 275 288
- US-A- 4 636 611
- US-A- 4 658 109
- US-A- 5 660 748
- US-A1- 2005 077 276
- US-A1- 2006 000 812
- DATABASE WPI Week 200426 Derwent Publications Ltd., London, GB; AN 2004-273937 XP002471536 -& JP 2004 066281 A (MITSUBISHI CABLE IND LTD) 4. März 2004 (2004-03-04)

## Beschreibung

Die Erfindung betrifft eine Laserstrahlschweißvorrichtung gemäß dem Oberbegriff des Anspruches 1 sowie ein Laserstrahlschweißverfahren gemäß dem Oberbegriff des Anspruches 11.

Eine derartige Laserstrahlschweißvorrichtung ist aus der US-A-4 658 109 bekannt. Mittels einer derartigen Laserstrahlschweißvorrichtung lassen sich ringförmige Fügezonen erzeugen, die eine verzugsfreie bzw. verzugsarme Verbindung zweier Bauteile ermöglicht. Der Aufbau einer derartigen Laserstrahlschweißvorrichtung muss jedoch mit einer sehr hohen Präzision erfolgen, damit die einzelnen optischen Bauteile genau zueinander ausgerichtet bzw. zentriert sind.

Weiterhin sind aus der US-2005/0077276 A1 und der US-A-4 636 611 Laserstrahlschweißvorrichtungen mit Lichtwellenleitern bekannt, die einen von einer Laserstrahlquelle erzeugten Laserstrahl in eine Optikeinrichtung einspeisen.

### Offenbarung der Erfindung

Ausgehend von dem dargestellten Stand der Technik liegt der Erfindung die Aufgabe zugrunde, eine Laserstrahlschweißvorrichtung nach dem Oberbegriff des Anspruchs 1 derart weiterzubilden, das eine vereinfachte Einstellung bzw. Ausrichtung der Bauteile der optischen Einrichtung ermöglicht wird. Diese Aufgabe wird bei einer Laserstrahlschweißvorrichtung mit den Merkmalen des Anspruchs 1 gelöst. Durch die im kennzeichnenden Teil des Anspruchs 1 angegebenen Merkmale lässt sich der Lichtwellenleiter insbesondere senkrecht sowie waag

recht zur optischen Achse verstellen, so dass das Gesamtsystem sehr einfach zentriert werden kann um somit mögliche Schräglagen des Fokusringes in Bezug auf die optische Achse der Laserstrahlschweißvorrichtung beseitigen zu können.

Vorteilhafte Weiterbildungen der erfindungsgemäßen Laserstrahlschweißvorrichtung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In Weiterbildung der Erfindung ist mit Vorteil vorgesehen, den von der Optikeinrichtung generierten ringförmigen Laserstrahl in im Wesentlichen radialer Richtung auf die Fügezone zweier Werkstücke zu richten, um somit eine Umfangsschweißnaht bzw. Radialschweißnaht zu erzeugen. Dabei muss die Umlenkung nicht notwendigerweise exakt radial, d.h. in einem 90° Winkel zur optischen Achse des von der Laserstrahlquelle erzeugten Laserstrahls bzw. zur Längs- oder Symmetrieachse der zu verschweißenden Bauteile erfolgen, sondern kann in einem Winkelbereich von 0° < α < 180° vorgenommen werde - je nach geometrischen Gegebenheiten. Wesentlich ist, dass der Laserstrahl seitlich auf das mindestens eine Werkstück (d.h. auf die Mantelfläche) umgelenkt wird. Bevorzugt ist es, wenn der in Umfangsrichtung geschlossene Laserstrahl zumindest in etwa senkrecht auf die Fügezone auftrifft. Mit einer derart ausgebildeten Laserstrahlschweißvorrichtung ist es möglich, eine umfangsgeschlossene Umfangsschweißnaht herzustellen, die ohne eine Überlappungszone auskommt, wodurch ein Bauteilverzug vermieden wird. Die Energieeinbringung in die Fügezone erfolgt homogen und gleichzeitig entlang der gesamten Länge der Sehweißnaht. Ferner kann auf eine Relativbewegung zwischen Laserstrahlquelle bzw. Lasersirahlfokus und dem mindestens einen Werkstück verzichtet werden, wodurch die Prozessgeschwindiskeit erhöht werden kann, da negative Fliehkrafieinflüsse entfallen. Die Laserstrahischweißvorrichtung eignet sich insbesondere zum Verschweißen verzugskritischer, zylindrischer Bauteile mit Durchmessern im Bereich < 60 mm, wobei jedoch bei Verwendung entsprechend leistungsstarker Laser auch Bauteile mit größeren Durchmessern problemlos miteinander verschweißbär sind.

Gemäß einer bevorzugten Ausführungsform der Erfindung ist das Umlenkmittel zum Umlenken des Laserstrahls, insbesondere zum Umlenken auf die Mantelfläche mindestens eines zylindrischen Bauteils als Kegelspiegel ausgebildet. Von Vorteil ist dabei die Anordnung der Spiegelfläche auf einer Kegelinnenseite, da hierbei der Kegelspiegel das mindestens eine Werkstück zumindest bereichsweise außen umschließend angeordnet werden kann und dadurch einfach justierbar ist. Bevorzugt wird der Kegelspiegel dabei aus Richtung des Kegelbodens her angestrahlt. Es ist jedoch auch denkbar, zusätzlich oder alternativ einen Kegelspiegel mit einer äußeren Spiegelfläche einzusetzen, der bevorzugt in das Innere mindestens eines Bauteils verfahren werden kann, wodurch eine umfangsgeschlossene Umfangsschweißnaht auf der Werkstückinnenseite herstellbar ist. Hierbei wird der Kegelspiegel bevorzugt aus Richtung der Kegelspitze ausgestrahlt. Durch die Wahl des Kegelwinkels kann der Eintreffwinkel des ringförmigen Laserstrahls seitlich auf dem mindestens einen Werkstück eingestellt werden. Der Kegelspiegel ist, gemäβ da Erfindung, koaxial zu einer optischen Achse der Laser-strahlschweißvorrichtung angeordnet. Bevorzugt handelt es sich um eine rotationssymmetrische Kegelform. Durch Abweichungen von der Kegelform kann eine von einer Kreisform abweichende Fügezone beaufschlagt werden.

Durch die Verschiebung des Kegelspiegels in axialer Richtung verändert sich der Durchmesser des Laserstrahlfokusringes, der somit auf den Durchmesser des mindestens einen zu bearbeitenden, insbesondere rotationssymmetrischen Werkstückes eingestellt werden kann.

Zur Erzeugung eines Laserstrahls mit ringförmiger Querschnittsfläche ist in Weiterbildung der Erfindung mindestens ein Axikon vorgesehen. Bei einem Axikon handelt es sich um ein zumindest abschnittsweise kegelförmiges optisches Element. Bevorzugt ist das Axikon zumindest in axialer Richtung verstellbar angeordnet, um hierdurch den Einfallswinkel des Laserstrahlfokusringes auf dem mindestens einen Werkstück variieren zu können.

Zweckmäßigerweise ist im Strahlengang vor dem Axikon ein Kollimator angeordnet, mittels dem ein paralleler Strahlenverlauf erzeugt wird, der dann von dem Axikon in eine Ringform gezwungen wird. Bevorzugt ist der Kollimator sowohl in senkrechter Richtung als auch in waagerechter Richtung zu einer optischen Achse verstellbar, um eine Intensitätsgleichverteilung über den Laserstrahlquerschnitt sicherzustellen.

Zur Erzeugung eines im Fügebereich fokussierten Laserstrahlringes ist mindestens eine Fokussiereinrichtung mit mindestens einer Fokussierlinse vorgesehen, die bevorzugt zwischen Axikon und Kegelspiegel angeordnet ist. Die Fügezone ist dabei bevorzugt unmittelbar im Brennpunkt der Fokussiereinrichtung angeordnet

In Weiterbildung der Erfindung ist mit Vorteil vorgesehen, das als Laserstrahlquelle eine gepulste Laserstrahlquelle eingesetzt wird. Hierbei können hohe Leistungen bei kurzer Pulsdauer ausgegeben werden. Gute Ergebnisse wurden m'rt Pulsenergien im Bereich von etwa 150 J bei einer Pulsdauer von etwa 50 ms erzielt Insbesondere bei der Verwendung von gepulsten Strahlquellen findet ein Wärmaleitschweißvorgang statt, bei dem der Werkstoff aufschmilzt und sich nadiainähte mit einem Aspektverhältnis (Tiefe zu Breite) von etwa 1:1 ausbilden. Es ist auch denkbar, Tiefschweißprozesse zur Entstehung einer Dampfkapillare mit einem Aspektverhältnis von > 1 zu realisieren.

Zur Prozessbeobachtung ist es von Vorteil, über einen Strahlenteiler aus dem Prozessstrahlengang einen Beobachtungsstrahlengang abzuzweigen und diesen einer, insbesondere digitalen Kamera zuzuleiten. Um den gesamten Bearbeitungsbereich erfassen zu können, wird innerhalb des Beobachtungsstrahlenganges bevorzugt ebenfalls ein Axikon platziert Die Ausrichtung der Kamera in axialer Richtung ermöglicht dabei das Einstellen des Kamerabildes, wobei zur Verbesserung der Abbildung eine ausreichende Beleuchtung sichergestellt sein muss. Weiterhin ist Gegenstand der Erfindung ein Schweißverfahren, bei dem ein insbesondere kreisförmiger Laserstrahl in einen ringförmigen Laserstrahl umgewandelt wird. Bevorzugt wird das Laserschweißverfahren mit der zuvor beschriebenen Laserstrahlschweißvorrichtung ausgeführt.

In Weiterbildung der Erfindung beinhaltet das Schweißverfahren als Verfahrensschritt das Umlenken des Laserstrahls mit ringförmiger Querschnittsfläche auf ein Werkstück zur Erzeugung einer Radialschweißnaht. Der Einfallswinkel auf die Mantelfläche des Werkstückes kann dabei je nach Anwendungsbereich und geometrischer Gegebenheiten zwischen 0° < α < 180° gewählt werden. Die Einstellung des Einfallwinkeis erfolgt bevorzugt über die Wahl des Kegelwinkels eines als Umlenkmittel eingesetzten Kegelspiegels und/oder über die Positionierung eines Axikons.

Bevorzugt findet während des Schweißvorganges keine Relativbewegung zwischen dem Werkstück und der Laserstrahlquelle bzw. dem ringförmigen Laserstrahlschweißfokus statt - Werkstück und Laserstrahlquelle sind also relativ zueinander ortsfest angeordnet.

### Kurze Beschreibung der Zeichnungen

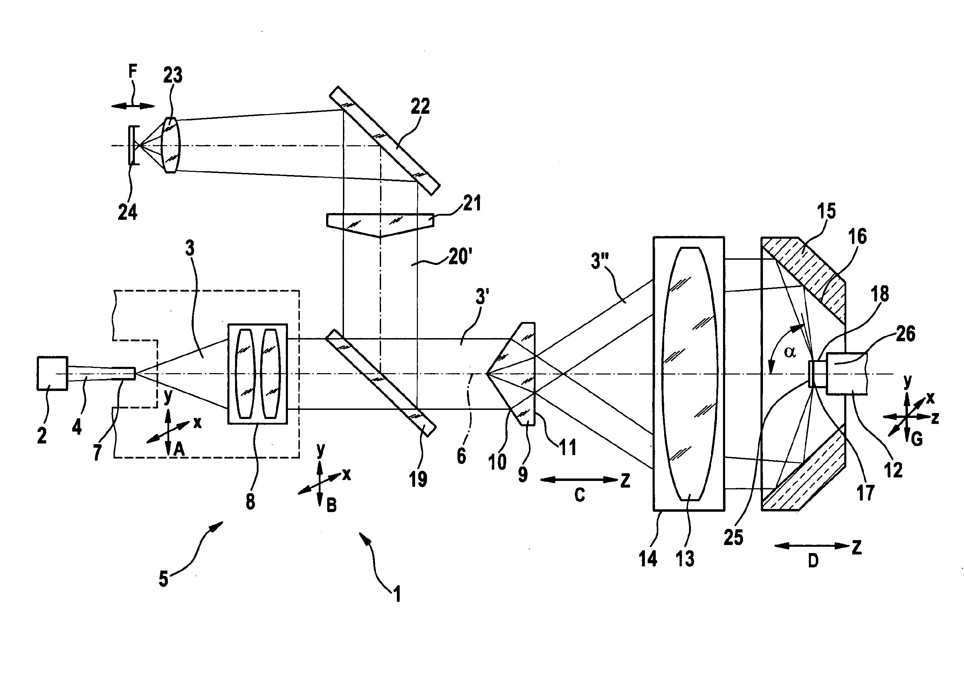

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in der einzigen Fig.1 den schematischen Aufbau einer Laserstrahlschweißvorrichtung zur Erzeugung einer Radialschweißnaht.

### Ausführüngsformen der Erfindung

Fig. 1 zeigt eine Laserstrahlschweißvorrichtung 1, die auch zum Härten von Werkstücken einsetzbar ist. Die Laserstrahlschweißvorrichtung weist eine Laserstrahlquelle 2 auf, die einen gepulsten Laserstrahl 3 mit kreisförmiger Querschnittsfläche erzeugt. Der Laserstrahl 3 wird über einen Lichtwellenleiter 4 in eine Optikeinrichtung 5 entlang einer optischen Achse 6 (Z-Achse) eingespeist. Der Mündungsbereich 7 des Lichtwellenleiters 4 ist senkrecht sowie waagerecht (entlang y-Achse und x-Achse) zu der optischen Achse verstellbar (Pfeilrichtungen A). Hierdurch kann eine Zentrierung des Laserstrahles 3 erfolgen. Der aufgeweitete Laserstrahl 3 trifft auf einen mit Abstand zu dem Mündungsbereich 7 des Lichtwellenleiters 4 angeordneten Kollimator 8 der Optikeinrichtung 5, der den Laserstrahl 3 parallelisiert. Der Kollimator 8 lässt sich senkrecht sowie waagerecht entlang y-Achse und x-Achse zur optischen Achse (Z-Achse) verstellen, wodurch eine gleichmäßige Verteilung der Intensität des Laserstrahls 3' erreicht wird (Bewegungen in Pfeilrichtungen B). Der parallel gerichtete Laserstrahl 3' trifft auf ein in axialer Richtung von dem Kollimator 8 beabstandet angeordnetes Axikon 9 mit einer kegelförmigen Auftrefffläche 10 und einer ebenen, quer zum Strahlengang angeordneten Abstrahlfläche 11.

Das Axikon 9 lässt sich in axialer Richtung entlang der optischen Achse 6 (Pfeilrichtungen C / Z-Achse) verstellen, wodurch ein später noch zu erläuternder Einfallwinkel α auf zwei in axialer Richtung aneinander anliegende Werkstücke 12, 25 (Deckel 25 und Grundkörper 12), welche mittels einer nicht gezeigten Verstelleinrichtung in allen Raumrichtungen (Pfeilrichtung G) verstellbar sind, variiert werden kann.

Mittels des Axikons 9 wird der parallel gerichtete Laserstrahl 3' mit kreisförmiger Querschnittsfläche in einen Laserstrahl 3" mit kreisringförmiger Querschnittsfläche umgewandelt, welcher durch eine ein Fokussierobjektiv 13 enthaltende Fokussiereinrichtung 14 strahlt und axial auf einen in axialer Richtung beabstandeten Kegelspiegel 15 mit einer inneren Spiegelfläche 16 trifft. Der Kegelspiegel 15 lenkt den ringförmigen Laserstrahl 3" nach radial innen unter einen Winkel α zur optischen Achse 6 auf eine seitliche Fügezone 17 der Werkstücke 12, 25 um. Die zylindrischen Werkstücke 12, 25 und die Fokussiereinrichtung 14 sind derart zueinander beabstandet angeordnet, dass der ringförmige Laserstrahl 3" an der seitlichen Fügezone 17 der Werkstücke 12, 25, fokussiert wird. Durch Verschieben des Kegelspiegels 15 entlang der optischen Achse 6 (Pfeilrichtungen D) kann der Durchmesser des erzeugten Laserstrahlschweißfokusringes 26 variiert werden. Durch die Wahl des Kegelwinkels kann der Einfallswinkel α des Laserstrahls auf das Werkstück 12 relativ zur optischen Achse 6 bzw. zur Symmetrieachse der Werkstücke 12, 25 eingestellt werden. Mittels des gleichzeitig auf die gesamte Fügezone 17 einwirkenden Laserstrahls bzw. Laserstrahlfokusrings entsteht eine gleichmäßige, symmetrische Umfangsschweißnaht.

Anstelle des Kegelspiegels 15 mit Innenspiegel 16 kann auch ein nicht gezeigter Kegelspiegel mit äußerer Kegelfläche eingesetzt werden. Dieser wird bevorzugt in die Werkstücke 12, 25 hineinverfahren, so dass die Umlenkung des Laserstrahls nicht wie gezeigt nach radial innen, sondern nach radial außen erfolgt.

Zu Beobachtungszwecken und zur insbesondere computergestützten Auswertung und gegebenenfalls Verstellung einzelner Optikelemente ist in den Strahlengang zwischen Kollimator 8 und Axikon 9 ein Strahlenteiler 19 eingesetzt, der einen parallelen Beobachtungslaserstrahlengang 20' erzeugt. Dieser Beobachtungslaserstrahlengang 20' trifft auf ein zweites Axikon 21 und wird über einen Spiegel 22 und eine Fokussierlinse 23 einer Digitalkamera 24 zugeleitet. Dort wird der Beobachtungslaserstrahlengang aufgrund des zweiten Axikons 21 ebenfalls kreisringförmig abgebildet. Zur optimalen Fokussierung ist die Digitalkamera 24 in axialer Richtung (Pfeilrichtungen F) verstellbar angeordnet.

## Patentansprüche

1. Laserstrahlschweißvorrichtung (1) zum miteinander Verschweißen von Werkstücken (12), mit einer Laserstrahlquelle (2) und einer im Laserstrahlengang (20') angeordneten Optikeinrichtung (5), wobei die Optikeinrichtung (5) einen von der Laserstrahlquelle (2) generierten Laserstrahl (3) in einen Laserstrahl (3") mit ringförmiger Querschnittsfläche umwandelnd ausgebildet ist,
**dadurch gekennzeichnet,**
**dass** der der Optikeinrichtung (5) zugewandte Mündungsbereich eines Lichtwellenleiters (4) zum Einspeisen des von der Laserstrahlquelle (2) erzeugten Laserstrahls (3) in die Optikeinrichtung (5) senkrecht und waagerecht zur axialen Richtung des Lasertrahles (3") positionsveränderbar angeordnet ist, dass die Optikeinrichtung (5) Umlenkmittel zum Umlenken des Laserstrahls (3") mit ringförmiger Querschnittsfläche zum Erzeugen einer Umfangsschweißnaht aufweist, dass das Umlenkmittel als Kegelspiegel (15) ausgebildet ist, und dass der Kegelspiegel (15) in axialer Richtung des Laserstrahles (3") positionsveränderbar angeordnet ist.

2. Laserstrahlschweißvorrichtung (1) nach Anspruch 1
**dadurch gekennzeichnet,**
**dass** die Optikeinrichtung (5) ein, insbesondere positionsveränderbar angeordnetes, Axikon (9) zum Umwandeln des von der Laserstrahlquelle (2) erzeugten Laserstrahls (3) in den Laserstrahl (3") mit ringförmiger Querschnittsfläche aufweist.

3. Laserstrahlschweißvorrichtung (1) nach Anspruch 2,
**dadurch gekennzeichnet,**
**dass** die Optikeinrichtung (5) einen im Strahlengang vor dem Axikon (9), insbesondere positionsveränderbar angeordneten, Kollimator (8) zur Erzeugung eines parallelen Strahlenverlaufs aufweist.

4. Laserstrahlschweißvorrichtung (1) nach einem der vorhergehenden Ansprüche,
**dadurch gekennzeichnet,**
**dass** die Optikeinrichtung (5) mindestens eine, insbesondere positionsveränderbar angeordnete, Fokussiereinrichtung (14) aufweist.

5. Laserstrahlschweißvorrichtung (1) nach einem der vorgehenden Ansprüche,
**dadurch gekennzeichnet,**
**dass** die Laserstrahlenquelle (2) einen gepulsten Laserstrahl (3) erzeugend ausgebildet ist.

6. Laserstrahlschweißvorrichtung (1) nach einem der vorhergehenden Ansprüche,
**dadurch gekennzeichnet,**
**dass** eine Prozessbeobachtungseinrichtung mit mindestens einer Kamera (24) vorgesehen ist, welche einen aus dem Laserstrahlengang über einen Strahlenteiler abgezweigten Beobachtungslaserstrahlengang (20') aufnehmend angeordnet ist.

7. Laserstrahlschweißverfahren (1), unter Verwendung einer Laserstrahlschweißvorrichtung (1) nach einem der vorhergehenden Ansprüche,
**dadurch gekennzeichnet,**
**dass** ein Laserstrahl (3) in einen Laserstrahl (3") mit ringförmiger Querschnittsfläche umgewandelt wird.

8. Laserstrahlschweißverfahren (1) nach Anspruch 7,
**dadurch gekennzeichnet,**
**dass** der Laserstrahl (3, 3', 3") mit ringförmiger Querschnittsfläche zum Erzeugen einer Radialschweißnaht umgelenkt wird.

9. Laserstrahlschweißverfahren (1) nach einem der Ansprüche 7 oder 8,
**dadurch gekennzeichnet,**
**dass** Werkstücke (12) mit jeweils einem Zylinderabschnitt miteinander verschweißt werden.

10. Laserstrahlschweißverfahren (1) nach einem der Ansprüche 7 oder 9,
**dadurch gekennzeichnet,**
**dass** die Laserstrahlquelle (2) und die zu verschwei-βenden Werkstücke (12) beim Schweißvorgang rotationsfrei angeordnet sind.

## Claims

1. Laser beam welding apparatus (1) for welding together workpieces (12), having a laser beam source (2) and an optical device (5) arranged in the laser beam path (20'), wherein the optical device (5) is configured to convert a laser beam (3) generated by the laser beam source (2) into a laser beam (3") having an annular cross-sectional area, **characterized in that** the opening region of an optical waveguide (4), which faces the optical device (5), is arranged such that it is positionally variable perpendicularly and horizontally with respect to the axial direction of the laser beam (3") for injecting the laser beam (3) generated by the laser beam source (2) into the optical device (5), **in that** the optical device (5) has deflection means for deflecting the laser beam (3") having an annular cross-sectional area for generating a circumferential welding seam, **in that** the deflection means is configured as a conical mirror (15), and **in that** the conical mirror (15) is arranged such that it is positionally variable in the axial direction of the laser beam (3").

2. Laser beam welding apparatus (1) according to Claim 1, **characterized in that** the optical device (5) has an axicon (9), which is in particular arranged such that it is positionally variable, for converting the laser beam (3) generated by the laser beam source (2) into the laser beam (3") having an annular cross-sectional area.

3. Laser beam welding apparatus (1) according to Claim 2, **characterized in that** the optical device (5) has a collimator (8), which is arranged, in particular such that it is positionally variable, in the beam path upstream of the axicon (9), for generating a parallel beam progression.

4. Laser beam welding apparatus (1) according to one of the preceding claims, **characterized in that** the optical device (5) has at least one focusing device (14), which is arranged in particular such that it is positionally variable.

5. Laser beam welding apparatus (1) according to one of the preceding claims, **characterized in that** the laser beam source (2) is configured to generate a pulsed laser beam (3).

6. Laser beam welding apparatus (1) according to one of the preceding claims, **characterized in that** a process observation device having at least one camera (24) is provided, which is arranged to record an observation laser beam path (20') which has been branched off from the laser beam path via a beam splitter.

7. Laser beam welding method, using a laser beam welding apparatus (1) according to one of the preceding claims, **characterized in that** a laser beam (3) is converted into a laser beam (3") having an annular cross-sectional area.

8. Laser beam welding method according to Claim 7, **characterized in that** the laser beam (3, 3', 3") having an annular cross-sectional area is deflected for generating a radial welding seam.

9. Laser beam welding method according to one of Claims 7 and 8, **characterized in that** workpieces (12) with in each case one cylinder section are welded together.

10. Laser beam welding method according to one of Claims 7 and 9, **characterized in that** the laser beam source (2) and the workpieces (12) to be welded together are arranged to be free from rotation during the welding operation.

## Revendications

1. Ensemble (1) de soudage par faisceau laser destiné à souder l'une à l'autre des pièces (12) et présentant une source (2) de faisceau laser et un dispositif optique (5) disposé dans le parcours (20') du faisceau laser,
le dispositif optique (5) étant configuré pour convertir le faisceau laser (3) produit par la source (2) de faisceau laser en un faisceau laser (3") de section transversale annulaire,
**caractérisé en ce que**
l'embouchure d'un conducteur (4) d'ondes lumineuses tournée vers le dispositif optique (5) et destinée à injecter dans le dispositif optique (5) le faisceau laser (3) produit par la source (2) de faisceau laser est disposée de manière à pouvoir être changée de position dans la direction verticale ou la direction horizontale par rapport à la direction axiale du faisceau laser (3"),
**en ce que** le dispositif optique (5) présente des moyens de déviation qui dévient le faisceau laser (3") de section transversale annulaire en vue de produire un cordon de soudure périphérique,
**en ce que** le moyen de déviation est configuré comme miroir conique (15) et
**en ce que** le miroir conique (15) est disposé de manière à pouvoir changer de position dans la direction axiale du faisceau laser (3").

2. Ensemble (1) de soudage par faisceau laser selon la revendication 1, **caractérisé en ce que** le dispositif optique (5) présente un axicon (9) disposé en particulier de manière à pouvoir changer de position et convertissant le faisceau laser (3) produit par la source (2) de faisceau laser en le faisceau laser (3") de section transversale annulaire.

3. Ensemble (1) de soudage par faisceau laser selon la revendication 2, **caractérisé en ce que** le dispositif optique (5) présente un collimateur (8) disposé en avant de l'axicon (9), en particulier de manière à pouvoir changer de position dans le parcours du faisceau pour produire un faisceau parallèle.

4. Ensemble (1) de soudage par faisceau laser selon l'une des revendications précédentes, **caractérisé en ce que** le dispositif optique (5) présente au moins un dispositif de focalisation (14) disposé en particulier de manière à pouvoir changer de position.

5. Ensemble (1) de soudage par faisceau laser selon l'une des revendications précédentes, **caractérisé en ce que** la source (2) de faisceau laser est configurée pour produire un faisceau laser (3) pulsé.

6. Ensemble (1) de soudage par faisceau laser selon l'une des revendications précédentes, **caractérisé en ce qu'**il présente un dispositif d'observation du processus qui présente au moins une caméra (24) et qui est disposé de manière à reprendre un parcours (20') de faisceau laser d'observation déviré du parcours du faisceau laser par un diviseur de faisceau.

7. Procédé de soudage par faisceau laser recourant à un dispositif (1) de soudage par faisceau laser selon l'une des revendications précédentes,
**caractérisé en ce que**
un faisceau laser (3) est converti en un faisceau laser (3") dont la section transversale a une surface annulaire.

8. Procédé de soudage par faisceau laser selon la revendication 7, **caractérisé en ce que** le faisceau laser (3, 3', 3") à section transversale de surface annulaire est dévié pour produire un cordon de soudure radiale.

9. Procédé de soudage par faisceau laser selon l'une des revendications 7 ou 8, **caractérisé en ce que** les pièces (12) soudées l'une à l'autre ont une section transversale cylindrique.

10. Procédé de soudage par faisceau laser selon l'une des revendications 7 ou 9, **caractérisé en ce que** la source (2) de faisceaux laser et les pièces (12) à souder sont disposées de manière à ne pas pouvoir tourner lors de l'opération de soudage.
